Europäisches Patentamt

European Patent Office

Office européen des brevets

(19)

(11) EP 1 362 832 A1

(12) EUROPEAN PATENT APPLICATION
published in accordance with Art. 158(3) EPC

(43) Date of publication:
19.11.2003 Bulletin 2003/47

(51) Int Cl.⁷: **C02F 1/20**, B01D 53/86, B01J 23/652

(21) Application number: 00971798.4

(22) Date of filing: 06.11.2000

(86) International application number:
PCT/JP00/07784

(87) International publication number:
WO 02/036496 (10.05.2002 Gazette 2002/19)

(84) Designated Contracting States:
AT BE CH CY DE DK ES FI FR GB GR IE IT LI LU MC NL PT SE TR
Designated Extension States:
AL LT LV MK RO SI

(71) Applicant: BABCOCK-HITACHI KABUSHIKI KAISHA
Tokyo 105-6170 (JP)

(72) Inventors:
• IMADA, Naomi,
Kure Res. Lab. of Babcock-Hitachi KK
Kure-shi, Hiroshima 737-0029 (JP)
• KATO, Yasuyoshi,
Kure Res. Lab. Babcock-Hitachi KK
Kure-shi, Hiroshima 737-0029 (JP)

(74) Representative: Jenkins, Peter David et al
PAGE WHITE & FARRER
54 Doughty Street
London WC1N 2LS (GB)

(54) **METHOD FOR PURIFYING EFFLUENT WATER CONTAINING AMMONIA**

(57) The invention is to provide a method for purifying an ammonia-containing effluent, the method does not form a secondary pollution substance and comprises a step for releasing and transferring ammonia ($NH_3$) from an ammonia-containing effluent into a gas phase, a step for heating the gas resulted at the ammonia transferring step and containing the released ammonia, and a step for contacting the gas heated and containing the ammonia with an ammonia-decomposing catalyst having a function of denitration to decompose the ammonia into nitrogen and water.

Fig. 2

## EP 1 362 832 A1

**Description**

TECHNICAL FIELD

The present invention relates to a method for purifying an ammonia-containing effluent. More specifically, the present invention relates to a method for purifying an ammonia-containing effluent by which method the ammonia ($NH_3$) contained in an effluent which is discharged from an effluent treating facility including a drain treating plant and a sewerage (night soil) treating plant and contains a nitrogen component, or the $NH_3$ contained in an $NH_3$-containing effluent discharged from a power plant can efficiently be decomposed into nitrogen ($N_2$) and water ($H_2O$) to render the $NH_3$ innocuous or harmless.

BACKGROUND ART

In recent years, there has been a growing concern to the conservation of the global environment, and attention has being given to a technology for removing the nitrogen contained in a wastewater. As a conventional technology for achieving such purpose, for example, ① a biological treating method in which an organic nitrogen contained in water is converted into an inorganic nitrogen to render the organic nitrogen innocuous by using a bacterium ("Water Treatment Engineering" page 206 and others), ② a discontinuous ammonia decomposing method using chlorine in which method $NH_3$ is oxidized to decompose by using sodium hypochlorite, ③ an ion exchanging method in which the $NH_3$ contained in an effluent is adsorbed on a zeolite through an ion exchange ("Water Treatment Engineering" page 519 and others), and ④ an ammonia stripping method in which the $NH_3$ contained in an $NH_3$-containing effluent is diffused or released to remove from the effluent into the atmosphere by using air or steam ("Environment Creation" 8, (9), 67 (1978) and others) can be mentioned. As to the preference of the methods, the biological treating (denitration) method of method ① is preferably adopted when the BOD (biochemical oxygen demand) of an effluent to be treated is high, and method ②, ③, or ④ is desirably adopted for the treatment of a waste water such as an effluent discharged from one of various processes in a chemical plant and an effluent discharged from a separate waste water treatment in both of which effluents most of the nitrogen contained therein is an ammonia nitrogen such as ammonia or ammonium ion.

However, the conventional technologies described above have such problems as shown below.

That is, the method ① has a problem that excess amount of a sludge is produced, in addition to such a problem as the size of a reaction bath necessary for the treatment becomes large since the rate of a biological reaction is slow, and thus a large space comes to be required for placing the reaction bath. Method ② has problems that the addition of sodium hypochlorite in an amount more than that stoichiometrically required is necessary for completely removing the ammonia and thus a treatment of residual chlorine becomes necessary, and that organic chlorine compounds are formed. Method ③ has a problem that a secondary effluent containing ammonium ion at a high concentration is produced at the time of regenerating a used zeolite and thus a treatment of the secondary effluent becomes necessary. Further, the method ④ has a problem that a secondary pollution is caused by diffusing an $NH_3$-containing gas, which was produced by transferring the $NH_3$ contained in an effluent into a gas phase, further into the atmosphere.

Among the methods described above, method ④ is advantageous compared with other methods since the treatment of an effluent is comparatively simple and the costs of equipments and operations are small. Accordingly, a combination in which the ammonia stripping method ④ is performed in combination with another method in which the $NH_3$ separated from an effluent and contained in the gas resulting at the stripping at a high concentration is oxidatively decomposed by using a catalyst, to make the $NH_3$ originally contained in the effluent innocuous as the result of the combination, has been adopted in current sewerage treatment plants.

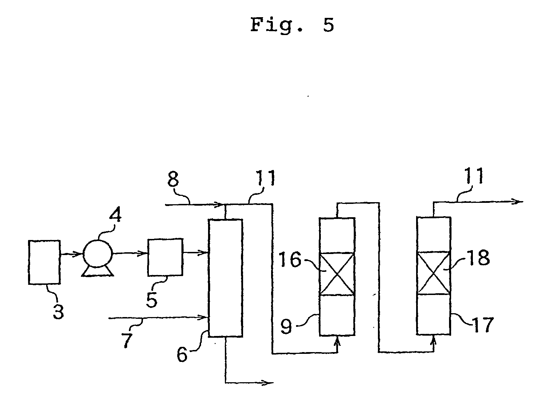

Fig. 5 is a diagram for illustrating a system of devices in an apparatus used in a conventional stripping-catalytic oxidation method in which an $NH_3$ stripping method and a method for oxidatively decompose the $NH_3$, contained in the gas obtained in the $NH_3$ stripping method, by using a catalyst are combined. As shown in Fig. 5, the apparatus is composed mainly of stripping tower 6 for diffusing or evaporating $NH_3$ from an $NH_3$-containing effluent into a gas phase, and catalyst tower 9 in which oxidizing catalyst 16 is filled and catalyst tower 17 in which reducing catalyst 18 is filled both of which towers 9 and 17 are located in some points in the down stream of the stripping tower. In the apparatus, an $NH_3$-containing effluent stored in tank 3 is introduced into pre-heater 5 with pump 4, heated, for instance, up to 100°C with the pre-heater 5, and then flowed into stripping tower 6 from an upper portion thereof and contacted with, for example, a steam, used as carrier gas 7, introduced from a lower portion of the tower 6, and a gas containing $NH_3$ at a high concentration is discharged through duct 11 connected to a top portion of the tower 6. The gas containing the released $NH_3$ is flowed into downstream catalyst tower 9 having oxidizing catalyst 16 filled therein, after diluted down to a prescribed concentration by air 8 used for the dilution when necessary, and the $NH_3$ is decomposed according to the equation (1) described below.

At this time, oxidation reactions shown by equations (2) and (3), respectively, occur at the same time as the

decomposition of $NH_3$, and large quantities of NO and $N_2O$ are produced. Accordingly, in order to treat an $NH_3$-containing effluent with certainty, it is necessary not only to decompose the $NH_3$ described above but also to remove the NOx produced as a byproduct at the time of the $NH_3$ decomposition. Heretofore, as shown in the Fig. 5 explained above, an additional catalyst tower in which a reducing catalyst is filled is installed in the down stream of a catalyst tower in which an oxidizing catalyst for decomposing $NH_3$ is filled, and a procedure in which the NO in the NOx described above is reduced to decompose by reacting residual $NH_3$ with the resulted NOx on the reducing catalyst according to the equation (4) described below has been practiced.

$$NH_3 + 3/4O_2 \rightarrow 1/2N_2 + 3/2H_2O \tag{1}$$

$$NH_3 + 5/4O_2 \rightarrow NO + 3/2H_2O \tag{2}$$

$$NH_3 + O_2 \rightarrow 1/2N_2O + 3/2H_2O \tag{3}$$

$$NH_3 + NO + 1/4O_2 \rightarrow N_2 + 3/2H_2O \tag{4}$$

In the conventional technology described above, however, even if it was possible to remove the NO, $N_2O$ has been discharged into the atmosphere as it is. Like $CO_2$, $N_2O$ is being said to be a substance contributing to the global warming. Accordingly, when the $N_2O$ was discharged into the atmosphere as it was, there is a danger that a secondary pollution is caused, and thus, the development of a method for treating an $NH_3$-containing effluent while causing no pollution has been desired in recent years.

Further, since regulations to effluents came into operation in 1993 (Heisei 5) as a measure against the eutrophication (over fertilization) of a sea area and it is necessary to cope with the regulations, the development of a new technology for treating nitrogen components in an effluent has been sought.

DISCLOSURE OF THE INVENTION

Subjects of the present invention are to resolve the problems in the conventional technologies described above and to provide a method for treating an $NH_3$-containing effluent which method is simple and in which a substance causing a secondary pollution is not formed.

In order to achieve the subjects described above, the present invention is summarized as follows:

(1) A method for purifying an ammonia-containing effluent wherein the ammonia ($NH_3$) contained in the effluent is rendered innocuous or harmless, the method comprises

a step for transferring the ammonia from the ammonia-containing effluent into a gas phase,

a step for heating the gas resulted at the ammonia transferring step and containing the ammonia, and

a step for contacting the ammonia-containing gas, heated at the gas heating step, with a catalyst comprising a first catalyst component having an activity for reducing nitrogen oxides with ammonia and a second catalyst component having an activity for forming NOx from ammonia to decompose the ammonia into nitrogen and water.

(2) The method for purifying an ammonia-containing effluent recited in paragraph (1) above wherein the catalyst comprises an oxide of one or more elements selected from the group consisting of titanium (Ti), tungsten (W), vanadium (V), and molybdenum (Mo), and a silica, zeolite and/or alumina having one or more noble metals selected from the group consisting of platinum (Pt), iridium (Ir), rhodium (Rh), and palladium (Pd) supported thereon.

(3) The method for purifying an ammonia-containing effluent recited in paragraph (1) or (2) above wherein the step for transferring the ammonia from the ammonia-containing effluent into a gas phase is a step for stripping the ammonia by blowing a carrier gas into the ammonia-containing effluent.

(4) The method for purifying an ammonia-containing effluent recited in any one of paragraphs (1) to (3) above wherein the step for heating the gas containing ammonia is a step for heating the ammonia-containing gas up to a temperature from 250 to 450°C by heating the ammonia-containing gas with a burner or by subjecting the ammonia-containing gas to a heat exchange with a gas discharged from an outlet of one of various apparatuses.

(5) The method for purifying an ammonia-containing effluent recited in any one of paragraphs (1) to (4) above wherein the ammonia-containing effluent is an ammonia-containing effluent discharged from an effluent treating facility including a drain treating plant and sewerage (night-soil) treating plant, or an ammonia-containing effluent discharged from a dry type electrostatic precipitator or a wet type desulfurizing apparatus installed for removing combustion ashes or $SO_2$ gas contained in an exhaust gas discharged from a thermal power plant having a coal firing boiler, oil firing boiler, or boiler firing a high sulfur content fuel.

For the purpose of the present invention, the term "a catalyst comprising a first catalyst component having an activity for reducing nitrogen oxides with $NH_3$ and a second catalyst component having an activity for forming nitrogen oxides (NOx) from $NH_3$ (hereinafter, sometimes referred to as $NH_3$ decomposition catalyst having a denitrating function)" means a catalyst proposed by the present inventors; and a catalyst prepared by mixing an oxide of one or more elements selected from the group consisting of titanium (Ti), tungsten (W), vanadium (V), and molybdenum (Mo) (a first component) and a silica, zeolite and/or alumina having one or more noble metals selected from the group consisting of platinum (Pt), iridium (Ir), rhodium (Rh), and palladium (Pd) supported thereon (a second component) can be mentioned as its example (Laid-open Japanes Patent Publication No. Hei 05-146634 and others).

As the first component of the catalyst described above, for example, the oxide of any one of the combination of Ti-V, Ti-Mo, Ti-W, Ti-V-W, or Ti-Mo-V, and as the second component of the catalyst described above, a composition prepared by impregnating a zeolite, porous silica, and/or porous alumina with a noble metal such as chloroplatinic acid, palladium nitrate, and rhodium chloride through an ion exchange to support the metal in advance can be used, respectively. As the first component, a zeolite such as a mordenite, supporting copper (Cu) or iron (Fe) may be used. Also, as the second component, the noble metal can be used as a salt of the noble metal without being supported on a carrier.

In the present invention, as the first component of the catalyst described above, an oxide of one or more elements selected from the group consisting of titanium, tungsten, and vanadium, and as the second component of the catalyst described above, a silica supporting one or more noble metals selected from the group consisting of platinum, iridium, and rhodium is preferably used, respectively.

As to the shape of the catalyst, a shape, which has ordinarily been employed for denitrating catalysts such as a plate-like shape formed by first converting a particle- or powder-like catalyst having the composition described above into a paste thereof and then applying the paste onto a metal lath plate or inorganic fiber woven fabric, honeycomb-like shape formed by an extrusion molding of the paste, or pellet-like shape formed by extruding the paste into a rod and then pelletizing the rod is preferably adopted.

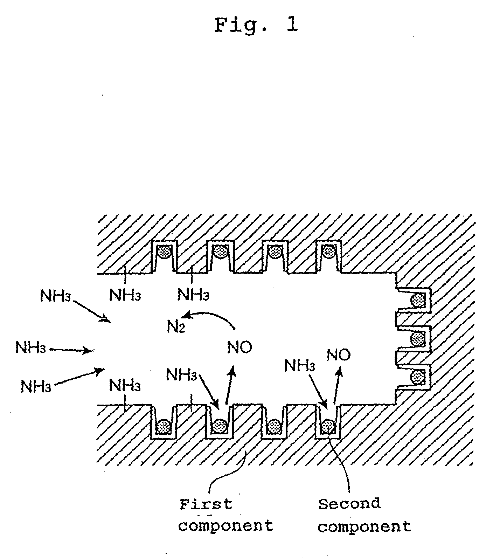

Fig. 1 illustrates the model of a small pore in an $NH_3$ decomposing catalyst having a denitrating function and used in the present invention. In Fig. 1, the small pore of the catalyst has a structure in which micro-pores formed by (or inherently contained in) a porous silica exist at places within a relatively macro-pore formed by a component (first component) on the surface of which NO is reduced by $NH_3$, and ultramicro-particles of another component (second component) having an activity of forming NOx from $NH_3$ are supported on the surface of the silica which forms the micro pores. The $NH_3$ diffuses within the macro-pore as well as the micro-pores in a catalyst, the diffused $NH_3$ is oxidized on the second component to form NO according to the equation (2) described above, the NO collide with $NH_3$ adsorbed on the surface of the first component (which forms the macro-pore), in the course of diffusing outside the catalyst, and the NO is reduced to $N_2$ according to the equation (5) described below.

$$NH_3 + NO + O_2 \rightarrow N_2 + H_2O \tag{5}$$

As described above, when an $NH_3$ decomposing catalyst of the present invention having a denitrating function is used, it is possible to convert $NH_3$ into $N_2$ without forming NO, or $N_2O$ which is considered to be formed during the process of forming the NO, since the oxidizing reaction of $NH_3$ and the reducing reaction of formed NO with $NH_3$ proceed within the catalyst.

In the present invention, as the step for transferring the $NH_3$ contained in an $NH_3$-containing effluent from the effluent into a gas phase, a method in which the $NH_3$ contained in the effluent is stripped off into a gas phase by blowing a carrier gas into the $NH_3$-containing effluent is typically used. When the pH of the effluent is 10 or higher at this stage, the effluent is used as it is. When the pH is lower than 10, it is desirable to discharge the $NH_3$ into a gas phase by blowing, for example, air as a carrier gas into the effluent after the pH of the effluent was raised up to 10 or higher by adding, for example, a slaked lime, lime, or the like into the effluent. As the carrier gas, a steam may be used in addition to air. Also, the discharging of the $NH_3$ can be performed by a means such as an agitation without using a carrier gas.

In the present invention, as the means for heating the $NH_3$-containing gas, an ordinary pre-heating method including, for example, heating with a burner and a heat exchange with a gas discharged from the outlet of one of various apparatuses is adopted. As the various apparatuses, for example, a catalytic reaction apparatus can be mentioned. An $NH_3$-containing gas is heated so that the reaction temperature in the catalyst layer of the downstream tower in which an $NH_3$-decomposing catalyst having a denitrating function is filled becomes 250 to 450°C, preferably 350 to 400°C. When the reaction temperature in the catalyst layer is lower than 250°C, not only it becomes impossible to obtain a sufficient $NH_3$ decomposing activity, but also the amount of $N_2O$ produced as a byproduct tends to increase. On the other hand, even if the temperature exceeded 450°C, the activity is not changed, but the operation cost becomes high.

In the present invention, "an $NH_3$-containing effluent", which is the object of the purification treatment, means an effluent containing an $NH_3$ nitrogen including (i) an effluent discharged from a drain treating plant or sewerage treating plant and (ii) an effluent discharged from a dry type electrostatic precipitator or a wet type desulfurizing equipment installed for removing combustion ashes or $SO_2$ gas contained in an exhaust gas (flue gas) discharged from a thermal power plant having a coal firing boiler, oil firing boiler, or boiler firing a high sulfur content fuel. The effluent may be an effluent in which an organic nitrogen originally contained therein has already been converted into an $NH_3$ nitrogen by a pre-treatment, including (a) an effluent in which an organic nitrogen contained therein has been decomposed to convert into an ammonia nitrogen which is transferable into a gas phase, by a general biological treatment in advance and (b) an effluent containing $NH_3$ at a high concentration and discharged at the time of regenerating a zeolite used in a conventional ion exchange method. As the high sulfur content fuel described above, for example, an emulsion fuel of an Orinoco tar can be mentioned.

BRIEF DESCRIPTION OF THE DRAWINGS

Fig. 1 is a schematic diagram for illustrating the model of a small pore in an $NH_3$ decomposing catalyst having a denitrating activity and used in the present invention.

Fig. 2 is a diagram for illustrating a system of devices in an example of the apparatuses used in the present invention.

Fig. 3 is a diagram for illustrating a system of devices in another example of the apparatuses used in the present invention.

Fig. 4 shows graphs comparing the performances of a catalyst used in the present invention with those of a catalyst used in a conventional technology.

Fig. 5 is a diagram for illustrating a system of devices in an apparatus of a conventional technology.

In the drawings, the meanings of the referentail numerals are as follows:

1 ... an aerobic digester chamber, 2 ... a non-dilution type aeration tank (an activated sludge tank), 3 ... tank, 4 ... pump, 5 ... a pre-heater, 6 ... a stripping tower, 7 ... a carrier gas, 8 ... air used for dilution, 9 ... catalyst tower, 10 ... an $NH_3$ decomposing catalyst having a denitrating function, 11 ... a duct, 12 ... combustion ashes, 13 ... an effluent from a flue gas desulfurization equipment, 14 ,... a filter, 15 ... an electrodialyser, 16 ... an oxidizing catalyst, 17 ... a catalyst tower, 18 ... a reducing catalyst, 20 ... an effluent discharged from a sewerage treating facility, 21 ... a gas containing $NH_3$ at a high concentration, 22 ... an effluent, and 23 ... an exhaust gas.

BEST MODE FOR CARRYING OUT THE INVENTION

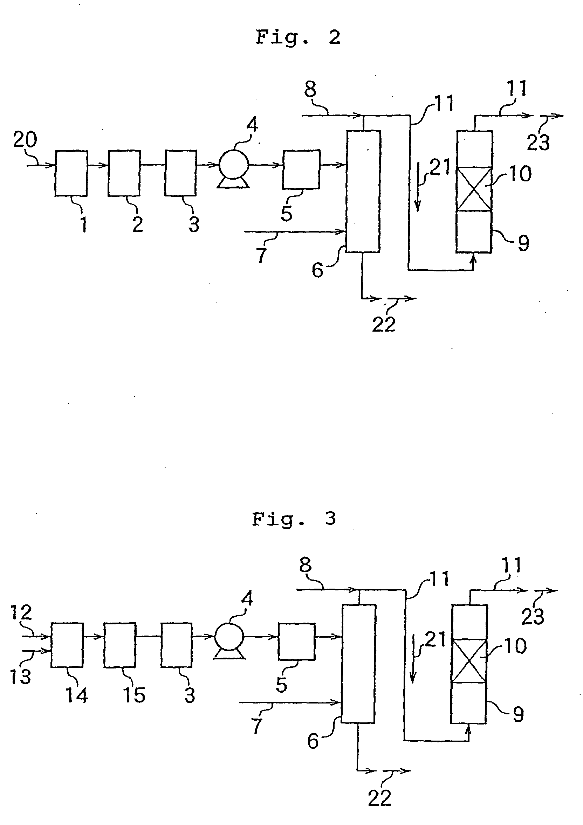

In Fig. 2, a system of devices in an apparatus used when the method of the present invention for treating an $NH_3$-containing effluent is applied for the treatment of an effluent discharged from a sewerage treating facility. This apparatus is composed mainly of anaerobic digester chamber 1 for digesting the effluent 20 discharged from a sewerage treating facility (hereinafter this effluent is sometimes referred to as sewerage effluent for brevity), in an anaerobic atmosphere, non-dilution type aeration tank 2 for aerating the sewerage effluent digested in the anaerobic digester chamber 1, in the presence of an activated sludge, tank 3 for storing the aerated effluent, pump 4 for introducing the aerated effluent stored in the tank 3 into pre-heater 5, stripping tower 6 for diffusing $NH_3$ from the effluent pre-heated with the pre-heater 5, catalyst tower 9 installed in the down stream of the stripping tower 6 and connected thereto through duct 11, and $NH_3$ decomposing catalyst 10 having a denitrating function and filled in the catalyst tower 9. Referential numeral 7 means a carrier gas and 8 means air used for dilution.

In such a structure, sewerage effluent 20 to be treated is subjected to pre-treatments in anaerobic digester chamber 1 and non-dilution type aeration (activated sludge) tank 2, stored in tank 3, introduced into pre-heater 5 through pump 4, and then pre-heated with the pre-heater 5 up to about 100°C. Pre-heated sewerage effluent 20 is supplied into stripping tower 6 installed in the down stream thereof, flowed down in the tower while being contacted with a steam supplied from a lower portion of the tower and used as carrier gas 7, and release $NH_3$. The gas containing the released $NH_3$, for example, a gas in which the concentration of the released $NH_3$ is tens of thousands ppm is diluted, for instance, to three timed (1:3) to foru times (1:4) with air 8 used for dilution, when necessary. In some cases, the gas is pre-heated with a burner or the like (both omitted in the drawings), introduced into downstream catalyst tower 9, contacted with $NH_3$ decomposing catalyst 10 having a denitrating function, and then discharged into the atmosphere after the $NH_3$ in the gas is oxidized on the catalyst 10 described above, for example, at 250 to 450°C to decompose into $N_2$ and $H_2O$. At this time, NO which is considered to be formed at the time of oxidative decomposition of $NH_3$ is reduced to $N_2$ by the denitrating function of the $NH_3$ decomposing catalyst 10 having the denitrating function described above, and the formation of $N_2O$ is also repressed.

According to this example, the $NH_3$ contained in an $NH_3$-containing gas can efficiently be decomposed by introducing an sewerage effluent discharged from a sewerage treating facility into stripping tower 6, transferring the $NH_3$ contained in the effluent into a gas phase in the stripping tower 6, and then introducing the gas containing the transferred $NH_3$ at a high concentration into catalyst tower 9 in which $NH_3$ decomposing catalyst 10 having a denitrqting function is filled. Since the NOx formed at this time as a byproduct can be reduced by the $NH_3$, the $NH_3$ contained in an $NH_3$-containing effluent can efficiently be reduced to $N_2$ without forming a substance causing a secondary pollution.

Also, according to this example, the apparatus becomes simple as a whole, since the catalyst tower for which two towers were required heretofore can be covered by one tower by using, as catalyst, $NH_3$ decomposing catalyst 10 having an activity for reducing NOx by $NH_3$.

In this example, the temperature of the catalytic reaction in catalyst tower 9 is usually 250 to 450°C and preferably 350 to 400°C.

Fig. 3 is a diagram for illustrating a structure of an apparatus when the present invention is applied for the treatment of an $NH_3$-containing effluent discharged from a thermal power plant. The difference of this apparatus from the one shown in Fig. 2 is that filter 14 and electrodialyser 15 are installed in place of anaerobic digester chamber 1 and non-dilution type aeration tank 2, respectively.

In such a structure, for example, combustion ashes 12 discharged from an air dust collector and an effluent 13 from a flue gas disulfurization equipment of a thermal power plant are introduced into filter 14. After the solid matters were separated by the filter 14, the effluent is flowed into electrodialyser 15 and concentrated therein. At this time, ammonium sulfate contained in the filtrate discharged from filter 14 is converted into ammonium hydroxide by, for example, a slaked lime separately added. The effluent containing ammonium hydroxide thus obtained is stored in tank 3 and then introduced into downstream stripping tower 6, after heated with heater 5 when necessary, and the $NH_3$ contained in the effluent is stripped in the tower. The $NH_3$-containing gas discharged from the stripping tower is flowed into catalyst tower 9, after diluted with air 8 used for dilution when necessary; and the $NH_3$ is converted into $N_2$ and $H_2O$ in the catalyst tower in the presence of $NH_3$ decomposing catalyst 10 having a denitrating function to render the $NH_3$ innocuous. At this time, the formation of NO and $N_2O$ is repressed.

According to this example, the $NH_3$ contained in an $NH_3$-containing effluent discharged from a thermal power plant can efficiently be rendered innocuous without forming, as a byproduct, a substance causing a secondary pollution.

Now, the present invention is described in more detail with reference to specific examples. However, it should be understood that the scope of the present invention is by no means limited by such specific examples.

Example 1

Ammonium paratungstate $((NH_4)_{10}H_{10} . W_{12}O_{46} . 6H_2O)$ in an amount of 2.5 kg and 2.33 kg of ammonium metavanadate were added to 67 kg of a slurry of metatitanic acid ($TiO_2$ content: 30 wt %, $SO_4$ content: 8 wt %) and mixed by using a kneader. The paste thus obtained was granulated, dried, and then calcined at 550°C for 2 hours. The granules thus obtained were ground to obtain powders as a first component of a catalyst. The catalyst powders had a composition of Ti/W/V = 91/5/4 (ratio of atoms).

On the other hand, 500 g of fine powders of silica (produced by Tomita Pharmaceuticals Co., Ltd.; trade name: Micon F) was added to 1 L of a solution of 1.33 x $10^{-2}$ wt % of chloroplatinic acid ($H_2[PtCl_6] . 6H_2O$), evaporated to dryness on a sand bath, and then calcined at 500°C for 2 hours in the air to prepare 0.01 wt % Pt . $SiO_2$ powders as a second component of the catalyst.

Next, 5.3 kg of silica. alumina type inorganic fibers and 17 kg of water were added to the mixture of 20 kg of the first component and 202 g of the second component, and then kneaded to obtain a catalyst paste. Separately from the procedures described above, a net-like product made of E glass fibers was impregnated with a slurry containing a titania, silica sol and polyvinyl alcohol, dried at 150°C, and cut into plural sheets to prepare catalyst substrates. Between two of the catalyst substrates (sheets) was held the catalyst paste described above and they were passed through press rollers to press, thereby obtaining a plate-like product. After the plate-like product was air-dried in the atmosphere for 12 hours, it was calcined at 500°C for 2 hours to obtain an $NH_3$ decomposing catalyst having a denitrating function.

The $NH_3$ decomposing catalyst having a denitrating function thus obtained was filled in a flow type reactor, and an $NH_3$ decomposing test was conducted by employing a simulated gas prepared by simulating an exhaust gas discharged from a stripping tower, under the conditions shown in the column A in Table 1 below. As the result, the

concentration of NH$_3$ at the outlet of the reactor was 4.5 ppm, that of NO was 0.8 ppm, and that of N$_2$O was 20.9 ppm, and NH$_3$ removing ratio was 97 %.

In this Example 1, the ratio of (the second component)/(the first component) in the catalyst described above was 1/99, and the content of Pt was 2 ppm excluding the catalyst substrates and inorganic fibers.

Example 2

A catalyst was prepared in the same manner as in the Example 1 described above with the exception that the solution of 1.33 x 10$^{-2}$ wt % of chloroplatinic acid (H$_2$[PtCl$_6$] . 6H$_2$O) used in Example 1 was changed to a solution of 3.32 x 10$^{-2}$ wt % of iridium chloride (IrCl$_4$) and the ratio of (the second component)/(the first component) in the catalyst was changed to 2/98, and the same NH$_3$ decomposing test as that of Example 1 was conducted by employing the catalyst thus prepared. As the result, the concentration of NH$_3$ at the outlet of the reactor was 5.0 ppm, that of NO was 2 ppm, and that of N$_2$O was 16 ppm, and NH$_3$ removing ratio was 96 %.

In this Example 1, the ratio of Ir/Pt in the catalyst was 1, and the content of the sum of the Pt and Ir was 5 ppm excluding the catalyst substrates and inorganic fibers.

Example 3

A catalyst was prepared in the same manner as in Example 2 with the exception that the iridium chloride used in Example 2 was changed to rhodium nitrate, and the same NH$_3$ decomposing test as that of Example 2 was conducted. As the result, the concentration of NH$_3$ at the outlet of the reactor was 10 ppm, that of NO was 5 ppm, and that of N$_2$O was 18 ppm, and NH$_3$ removing ratio was 94.7 %.

Comparative Example 1

A cordierite carrier (density of cells: 200 cell/inch, cell thickness: 0.3 mm) was impregnated with a titania sol (TiO$_2$ content: 30 wt %), dried at 150°C, impregnated with the titania sol again, dried at 150°C, and then calcined at 500°C for 2 hours to obtain a catalyst carrier. The catalyst carrier thus obtained was impregnated with an aqueous solution of dinitrodiammineplatinum so that the ratio of Pt became 0.1 wt %, dried at 150°C, and then calcined at 550°C for 2 hours to obtain an oxidizing catalyst. Separately from the procedure described above, a reducing catalyst was prepared in a method similar to that of Example 1 by using only the first component of the NH$_3$ decomposing catalyst having a denitrating function used in Example 1.

Next, two flow type reactors both of which were the same as that used in Example 1 were installed in parallel; within the reactor of the upstream side, the oxidizing catalyst described above and within the reactor of the downstream side, the reducing catalyst described above were filled, respectively; and an NH$_3$ decomposing test was conducted by flowing a simulated gas prepared by simulating the same gases discharged from the stripping towers in Examples 1 to 3 under the conditions shown in the column B in Table 1 below. As the result, the concentration of NH$_3$ at the outlet of the reactor was 250 ppm, that of NO was 250 ppm, and that of N$_2$O was 900 ppm, and NH$_3$ removing ratio was 99.5 %.

Table 1

| Items | Conditions A | Conditions B |
|---|---|---|
| Amount of gas | 128 L/h | The same as left |
| Gas composition | NH$_3$: 3000 ppm<br>H$_2$O: 28 %<br>Air: the remainder | The same as left |
| Temperature | 400°C | Oxidizing catalyst layer: 280°C<br>Reducing catalyst layer: 350°C |
| Aerial velocity | 6 m/h | Oxidizing catalyst tower: 17 m/h<br>Reducing catalyst tower: 12 m/h |

The results obtained in Examples 1 to 3 and Comparative Example 1 are collectively shown in Table 2 below.

In Table 2, the value of NH$_3$ removing ratio was obtained from the NH$_3$ concentrations at the inlet and outlet of a reactor, respectively, according to the following equation:

$$\text{NH}_3 \text{ removing ratio} = \frac{\text{NH}_3 \text{ ppm at inlet} - \text{NH}_3 \text{ ppm at outlet}}{\text{NH}_3 \text{ ppm at inlet}} \times 100 \ (\%)$$

Table 2

| | $NH_3$ at outlet (ppm) | NO at outlet (ppm) | $N_2$ at outlet (ppm) | $NH_3$ removing ratio (%) |
|---|---|---|---|---|
| Example 1 | 4.5 | 0.8 | 20.9 | 97 |
| " 2 | 5.0 | 2 | 16 | 96 |
| " 3 | 10 | 5 | 18 | 94.7 |
| Comparative Example 1 | Oxidizing catalyst tower: 250 Reducing catalyst tower: 3 | 250 | 900 | 90 |
| | | 5 | 900 | 99.5 |

As shown in Table 2, in the case of Comparative Example 1, the concentrations of $NH_3$, NO, and $N_2O$ at the outlet of the oxidizing catalyst reactor were 250, 250, and 900 ppm, respectively. Since the $NH_3$ and NO among the gas components are reacted on the reducing catalyst filled in the downstream reactor to form $N_2$, the concentrations of the $NH_3$ and NO at the outlet of the reducing catalyst reactor were 3 ppm and 5 ppm, respectively. However, since the $N_2O$ formed in the oxidizing catalyst reactor described above is not decomposed on the reducing catalyst, the concentration of the $N_2O$ at the outlet of the reducing catalyst reactor remained to be 900 ppm without being reduced from the value at the outlet of the oxidizing catalyst reactor.

On the other hand, in Examples 1 to 3, the concentration of NO at the outlet of the catalyst reactor was few ppm and that of $N_2O$ was 16 to 21 ppm. From this fact, it can be understood that according to the method of the present invention, the amount of nocuous $N_2O$ formed can considerably be lowered compared with methods of the conventional technology and moreover, costs of equipment and operation can be reduced by changing the design of the catalyst tower from a conventional two tower type to one tower type.

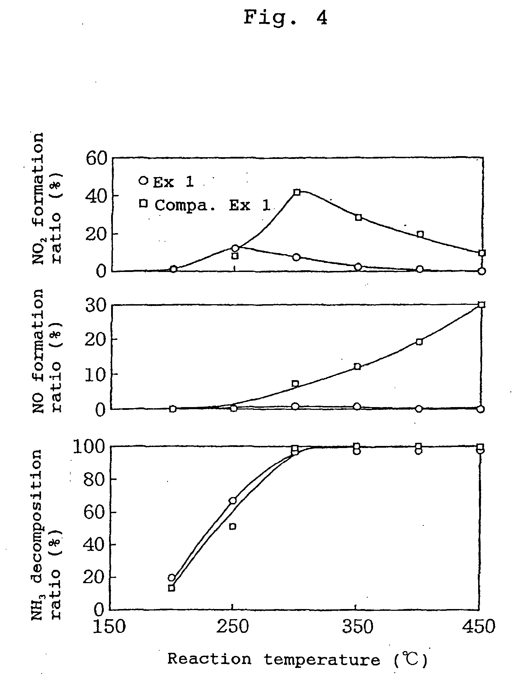

Fig. 4 exhibits graphs showing the temperature dependencies of the $NH_3$ decomposition ratio, and the amounts of NO and $N_2O$ formed at the time of the $NH_3$ decomposition determined when the $NH_3$ decomposing catalyst having a denitrating function and shown in Example 1 was employed under the conditions shown in Table 3 and those determined when the oxidizing catalyst shown in Comparative Example 1 was employed, respectively.

In Table 4, the $NH_3$ removing ratios were obtained by the same manner as described above, and the ratios of the formation of NO or $N_2O$ were obtained from the concentrations of NO, $N_2O$ and $NH_3$ at the outlet and inlet of a reactor, respectively, according to the following equation:

$$\text{Formation ratio of NO, N}_2\text{O} = \frac{\text{NO or N}_2\text{O ppm at outlet}}{\text{NH}_3 \text{ ppm at inlet}} \times 10 \ (\%)$$

Table 3

| Items | Conditions |
|---|---|
| Amount of gas | 128 L/h |
| Gas composition | $NH_3$: 3000 ppm $H_2O$: 28 % Air: the remainder |
| Temperature | 200 $\sim$ 450°C |
| Aerial velocity | 17 m/h |

From Fig. 4, it can be understood that the temperature dependency of the $NH_3$ removing ratio of the catalyst were about the same between the catalyst in Example 1 and the catalyst in Comparative Example 1 and the $NH_3$

removing ratios were about 100 % at a temperature higher than 300°C for both of the catalysts, but the ratio of the formations of NO and $N_2O$ with the catalyst of Comparative Example 1 were high at each of the temperatures at which the values were determined.

On the other hand, the ratios of the formations of NO and $N_2O$ for the catalyst of Example 1 were low even in the temperature range of 250~450°C and the specific values were lower than 1 % of $NH_3$.

From this fact, it can be understood that the $NH_3$ decomposing catalyst having a denitrating function and used in the present invention can almost completely decompose $NH_3$ in such a wide range as 250~450°C while repressing the formation of NOx.

INDUSTRIAL APPLICABILITY

According to the invention defined in claim 1 described later, the $NH_3$ contained in an $NH_3$-containing effluent can be decomposed without the formation of a substance causing a secondary pollution such as $N_2O$ which produce an adverse effect to the question of the global warming. Also, the catalyst reaction tower for which the use of two towers was necessary heretofore can be managed with the use of one tower, according to the invention of claim 1.

According to the invention defined in claim 2 described later, the $NH_3$ contained in an $NH_3$-containing effluent can efficiently be decomposed while repressing the formation of NO and $N_2O$ which tend to be formed at the time of $NH_3$ decomposition, in addition to the $NH_3$ decomposing effect obtained by the invention described just above.

According to the present invention defined in claim 3 described later, the $NH_3$ contained in an $NH_3$-containing effluent can efficiently be diffused into a gas phase, in addition to the effects obtained by the inventions described above.

According to the present invention defined in claim 4 described later, the decomposition ratio of $NH_3$ can be increased more at a most suitable temperature, in addition to the effects obtained by the inventions described above.

According to the present invention defined in claim 5 described later, the $NH_3$ contained in an $NH_3$-containing effluent discharged from a drain treating facility or sewerage treating facility can efficiently be decomposed.

**Claims**

1.  A method for purifying an ammonia-containing effluent wherein the ammonia ($NH_3$) contained in the effluent is rendered innocuous, the method comprises

    a step for transferring the ammonia from the ammonia-containing effluent into a gas phase,

    a step for heating the gas resulted at the ammonia transferring step and containing the ammonia, and

    a step for contacting the ammonia-containing gas, heated at the gas heating step, with a catalyst comprising a first catalyst component having an activity for reducing nitrogen oxides with ammonia and a second catalyst component having an activity for forming NOx from ammonia to decompose the ammonia into nitrogen and water.

2.  The method for purifying an ammonia-containing effluent according to claim 1 wherein the catalyst comprises an oxide of one or more elements selected from the group consisting of titanium (Ti), tungsten (W), vanadium (V), and molybdenum (Mo), and a silica, zeolite and/or alumina having one or more noble metals selected from the group consisting of platinum (Pt), iridium (Ir), rhodium (Rh), and palladium (Pd) supported thereon.

3.  The method for purifying an ammonia-containing effluent according to claim 1 or 2 wherein the step for transferring the ammonia from the ammonia-containing effluent into a gas phase is a step for stripping the ammonia by blowing a carrier gas into the ammonia-containing effluent.

4.  The method for purifying an ammonia-containing effluent according to any one of claims 1 to 3 wherein the step for heating the gas containing ammonia is a step for heating the ammonia-containing gas to a temperature from 250 to 450°C by heating the ammonia-containing gas with a burner or by subjecting the ammonia-containing gas to a heat exchange with a gas discharged from an outlet of one of various apparatuses.

5.  The method for purifying an ammonia-containing effluent according to any one of claims 1 to 4 wherein the ammonia-containing effluent is an ammonia-containing effluent discharged from an effluent treating facility including a drain treating plant and sewerage treating plant, or an ammonia-containing effluent discharged from a dry type electrostatic precipitator or a wet type desulfurizing apparatus installed for removing combustion ashes or $SO_2$ gas contained in an exhaust gas discharged from a thermal power plant having a coal firing boiler, oil firing boiler, or boiler firing a high sulfur content fuel.

Fig. 1

Fig. 2

Fig. 3

Fig. 4

Fig. 5

**INTERNATIONAL SEARCH REPORT**

| International application No. |
| --- |
| PCT/JP00/07784 |

| A. CLASSIFICATION OF SUBJECT MATTER |
| --- |
| Int.Cl⁷ C02F1/20, B01D53/86, B01J23/652 |

According to International Patent Classification (IPC) or to both national classification and IPC

| B. FIELDS SEARCHED |
| --- |
| Minimum documentation searched (classification system followed by classification symbols)<br>Int.Cl⁷ C02F1/20, B01D53/86 |

Documentation searched other than minimum documentation to the extent that such documents are included in the fields searched
Jitsuyo Shinan Koho              1926-1996      Toroku Jitsuyo Shinan Koho  1994-2001
Kokai Jitsuyo Shinan Koho  1971-2001      Jitsuyo Shinan Toroku Koho  1996-2001

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 8-197039 A (Nippon Shokubai Co., Ltd.),<br>06 August, 1996 (06.08.1996),<br>Claim 2; Column 3, lines 26 to 43; Column 4, lines 25 to 39; Fig. 1   (Family: none) | 1-5 |
| Y | JP 11-76761 A (JGC Corporation),<br>23 March, 1999 (23.03.1999),<br>Claims; Column 1, lines 24 to 26; Column 3, lines 20 to 27; Fig. 1   (Family: none) | 1-5 |
| Y | JP 11-347535 A (The Tokyo Electric Power Company, Incorporated),<br>21 December, 1999 (21.12.1999),<br>Claims 1, 2; Column 1, lines 24 to line 32;<br>Column 4, lines 9 to 15   (Family: none) | 1-3,5 |
| Y | US 5409681 A (Babcock-Hitachi K.K.),<br>25 April, 1995 (25.04.1995),<br>Claims; Column 2, line 66 to Column 3, line 4; Column 4, lines 3 to 33; Column 4, lines 47 to 56; Column 5, lines 21 to 24<br>& JP 5-146634 A      & EP 544282 A | 1-5 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 January, 2001 (26.01.01) | Date of mailing of the international search report<br>06 February, 2001 (06.02.01) |
| --- | --- |
| Name and mailing address of the ISA/<br>Japanese Patent Office | Authorized officer |
| Facsimile No. | Telephone No. |

Form PCT/ISA/210 (second sheet) (July 1992)